(19)

Europäisches Patentamt
European Patent Office
Office européen des brevets

(11)    **EP 2 034 621 A1**

(12)    **EUROPEAN PATENT APPLICATION**

(43) Date of publication:
**11.03.2009 Bulletin 2009/11**

(51) Int Cl.:
*H04B 1/713* (2006.01)    *H04L 27/00* (2006.01)

(21) Application number: **08015865.2**

(22) Date of filing: **09.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **10.09.2007 JP 2007233619**

(71) Applicant: **NEC Corporation**
**Minato-ku**
**Tokyo (JP)**

(72) Inventors:
 • **Kawabata, Hisashi**
  **Minato-ku,**
  **Tokyo 108-8001 (JP)**

 • **Iwasaki, Motoya**
  **Minato-ku,**
  **Tokyo 108-8001 (JP)**
 • **Tomokiyo, Ryo**
  **c/o NEC Corp.,**
  **7-1,**
  **Tokyo 108-8001 (JP)**

(74) Representative: **Glawe, Delfs, Moll**
**Patentanwälte**
**Postfach 26 01 62**
**80058 München (DE)**

(54)    **Wireless communication system and method**

(57)    Provided are a wireless communication system and method for enabling measurement of amount of phase fluctuation before and after frequency hopping and improving the reception characteristic. A mobile station (301) transmits a plurality of reference signals upon placing the reference signals in temporally spaced-apart relation in at least one of information transmission units (one or a plurality of time slots) wirelessly transmitted in conformity with a hopping period, and a base station (302) receives an information transmission unit that has been transmitted from the mobile station (301) and, if this information transmission unit is one that includes a plurality of the reference signals, obtains a phase fluctuation from the plurality of reference signals and obtains a frequency deviation from the phase fluctuation.

FIG.3

EP 2 034 621 A1

**Description**

REFERENCE TO RELATED APPLICATION

This application is based upon and claims the benefit of the priority of Japanese patent application No. 2007-233619 filed on Sept. 10, 2007, the disclosure of which is incorporated herein in its entirety by reference thereto.

FIELD OF THE INVENTION

This invention relates to a wireless communication system. More particularly, the invention relates to a system and method for performing wireless communication by frequency hopping.

BACKGROUND OF THE INVENTION

In mobile communication systems that communicate wirelessly using a frequency hopping scheme, the transmission carrier frequency is changed over in conformity with a time slot that forms the unit of information transmission. The uplink receiving function on the side of the base station can be improved by correcting a deviation between the transmission carrier frequency at which a signal is transmitted from a mobile station and the reception carrier frequency at which the signal is received by the base station.

By way of example, if the frequency deviation between a mobile station and a base station is 1 kHz and the length of the time slot is 0.5 ms, then a phase rotation of 180° (0.5 ms x 1 kHz x 360°) will appear in one time slot in the receive baseband signal.

Consequently, the frequency deviation is a cause of degradation of the reception characteristic in a case where the phase of a signal that has been phase-modulated by a phase modulation scheme such as BPSK (Binary Phase Shift Keying) of QPSK (Quadrature Phase Shift Keying) is discriminated.

AFC (Automatic Frequency Control) has long been known as a method of correcting for frequency deviation in a receiver. For example, an ordinary method of AFC known in the art involves measuring, at a base station, the amount of fluctuation in the phase of a received signal corresponding to an already known reference signal (e.g., a signal comprising an already known pattern, referred to as a "pilot signal") transmitted periodically from a mobile station, and subjecting the received signal to opposite-phase rotation that is commensurate with the observed amount of phase fluctuation, thereby performing a frequency-deviation correction of the received signal.

Patent Document 1 discloses an arrangement in which channel estimation and signal detection are performed with regard to a slot or a suddenly received signal to thereby estimate channel error. This arrangement is an example of a system in which a CDMA (Code Division Multiple Access) system or similar system provided with time slots is improved in performance even if frequency deviation and shift increase or traveling velocity of a mobile station rises. Patent Document 1 discloses that a differential method based upon a phase difference between symbols is used when the phase deviation of a channel is estimated. However, the content of this patent document differs completely from the object of the present invention (i.e., to make it possible to measure amount of fluctuation in phase before and after frequency hopping).

[Patent Document 1] Japanese Patent Publication Kokai JP-A No. 2006-512808

SUMMARY OF THE DISCLOSURE

The entire disclosures of the above Patent Document are herein incorporated by reference thereto. The analysis below is given by the present invention.

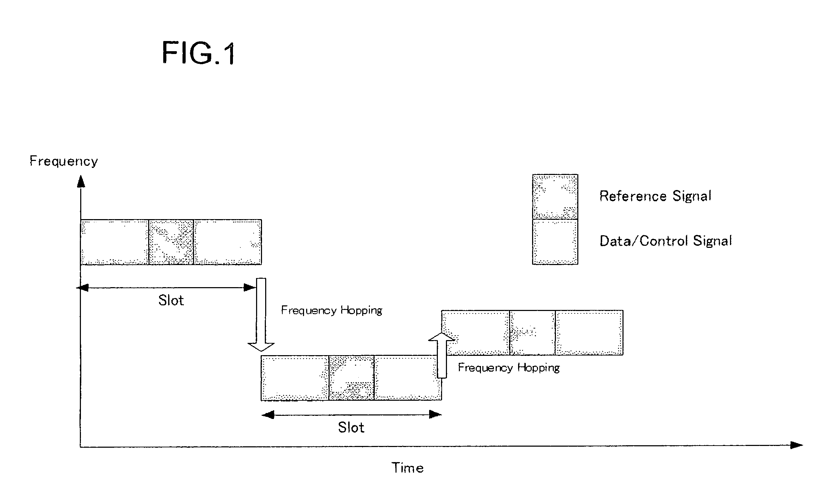

Fig. 1 is a diagram useful in describing the principle of a wireless communication system that performs frequency hopping every time slot that forms a unit of information transmission. In the example shown in Fig. 1, a known reference signal (pilot signal) has been inserted into a time slot. Owing to a change in frequency that accompanies frequency hopping, the phase of a received signal changes at a receiver such as a base station.

As a consequence, the amount of phase fluctuation before and after frequency hopping cannot be measured and it is difficult to correct the frequency deviation of the received signal by AFC control.

Accordingly, an object of the present invention is to provide a wireless communication system and method for enabling measurement of amount of phase fluctuation before and after frequency hopping and improving the reception characteristic, as well as a wireless station that constructs this system.

The above and other objects may be solved by the present invention which the following general configuration.

In accordance with a first aspect of the present invention, there is provided a wireless communication system comprising: a first node for transmitting a plurality of reference signals upon placing the reference signals in temporally spaced-apart relation in at least one of information transmission units wirelessly transmitted in conformity with a hopping period; and a second node which, if an information transmission unit received from the first node is an information transmission unit that includes a plurality of the reference signals, is for obtaining a phase fluctuation from the plurality of reference signals and obtaining a frequency deviation from the phase fluctuation.

In the present invention, it may be so arranged that the second node corrects the frequency of a received signal based upon the frequency deviation.

In the present invention, it may be so arranged that the second node obtains a plurality of frequency deviations from results of measuring phase fluctuations of reference signals relating to a plurality of the information transmission units and statistically processes the plurality of frequency deviations to thereby correct the frequency deviation of a received signal.

In the present invention, the information transmission unit includes at least one time slot transmitted at the same carrier frequency.

In the present invention, it may be so arranged that the information transmission unit that includes the plurality of reference signals forms a time slot of a control channel, an information transmission unit that includes at least data forms a time slot of a data channel, and the control channel and one or a plurality of the data channels are transmitted from the first node to the second node by a frequency hopping scheme.

In the present invention, it may be so arranged that the first node includes: means for generating the reference signals; means for generating a data/control signal that is transmitted to the second node; means for multiplexing the reference signals and the data/control signal to thereby generate the information transmission unit; and means for frequency-modulating the information transmission unit by a prescribed frequency and transmitting the modulated signal; wherein a plurality of the reference signals are inserted into at least one information transmission unit in association with a plurality of the information transmission units transmitted by a frequency hopping scheme.

In the present invention, it may be so arranged that the second node includes: means which, if a received information transmission unit is an information transmission unit that includes a plurality of the reference signals, is for calculating an amount of phase fluctuation from phases of the plurality of reference signals; means for deriving a frequency deviation from the amount of phase fluctuation; and means for correcting the frequency of a received signal based upon the frequency deviation.

In the present invention, the first and second nodes construct a mobile station and a base station, respectively.

In the present invention, the first and second nodes construct a base station and a mobile station, respectively.

In accordance with a second aspect of the present invention, there is provided a base station comprising: means for receiving an information transmission unit transmitted in conformity with a hopping period as an uplink signal from a mobile station; and means which, if the received information transmission unit is an information transmission unit in which a plurality of reference signals have been placed in temporally spaced-apart relation, is for obtaining a phase fluctuation of the plurality of reference signals and obtaining a frequency deviation from the phase fluctuation. Further, in accordance with the present invention, there is provided a base station having means for transmitting a plurality of reference signals upon placing the reference signals in temporally spaced-apart relation in at least one of information transmission units wirelessly transmitted in conformity with a hopping period.

In accordance with another aspect of the present invention, there is provided a mobile station comprising: means for receiving an information transmission unit transmitted in conformity with a hopping period as a downlink signal of a base station; and means which, if the received information transmission unit is an information transmission unit in which a plurality of reference signals have been placed in temporally spaced-apart relation, is for obtaining a phase fluctuation of the plurality of reference signals and obtaining a frequency deviation from the phase fluctuations. Further, in accordance with the present invention, there is provided a mobile station having means for transmitting a plurality of reference signals upon placing the reference signals in temporally spaced-apart relation in at least one of information transmission units wirelessly transmitted in conformity with a hopping period.

In accordance with a further aspect of the present invention, there is provided a frequency control method comprising the steps of: receiving an information transmission unit transmitted from a transmitting side in conformity with a hopping period; and if the received information transmission unit is an information transmission unit in which a plurality of reference signals have been placed in temporally spaced-apart relation, obtaining a phase fluctuation of the plurality of reference signals and obtaining a frequency deviation from the phase fluctuation.

In accordance with a further aspect of the present invention, there is provided a program for causing a computer of a base station to execute the following processing in a case where a signal is received in which a plurality of reference signals have been placed in temporally spaced-apart relation in at least one information transmission unit transmitted in conformity with a hopping period as an uplink signal from a mobile station: obtaining a phase fluctuation of the plurality of reference signals and obtaining a frequency deviation from the phase fluctuation.

In accordance with a further aspect of the present invention, there is provided a program for causing a computer of a mobile station to execute the following processing in a case where a signal is received in which a plurality of reference signals have been placed in temporally spaced-apart relation in at least one information transmission unit transmitted in conformity with a hopping period as a downlink signal from a base station: obtaining a phase fluctuation of the plurality of reference signals and obtaining a frequency deviation from the phase fluctuation.

In accordance with the present invention, the amount of phase fluctuation between reference signals is determined from a plurality of reference signals using a prescribed slot format, the amount of phase fluctuation before and after frequency hopping is made measurable by correcting frequency deviation, and the reception characteristic is improved.

BRIEF DESCRIPTION OF THE DRAWINGS

Fig. 1 is a diagram useful in describing frequency hopping transmission;
Fig. 2 is a diagram useful in describing a slot format according to an embodiment of the present invention;
Fig. 3 is a diagram illustrating the configuration of an embodiment of the present invention;
Fig. 4 is a diagram useful in describing the operation of an embodiment of the present invention; and
Fig. 5 is a diagram illustrating the configuration of another embodiment of the present invention.

PREFERRED MODES OF THE INVENTION

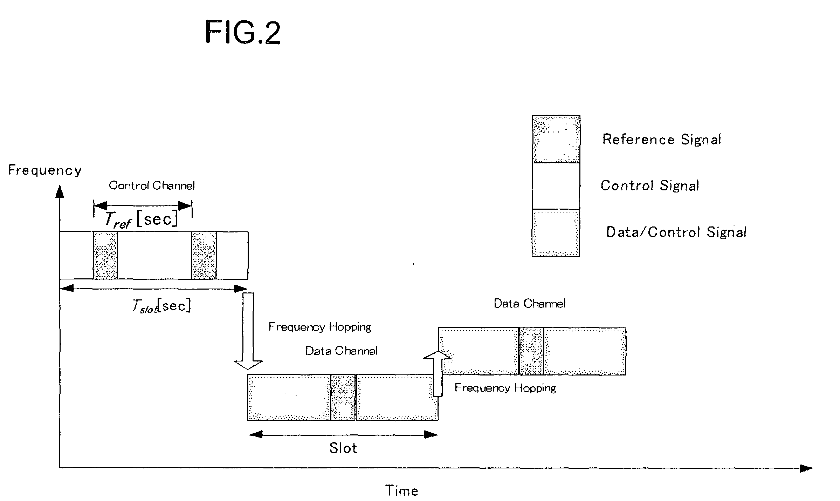

The present invention will now be described in detail with reference to the accompanying drawings. In a mode of practicing the present invention, different slot formats are applied to a plurality of channels for a link from one station [e.g., a mobile station (or base station)] to another station [e.g., a base station (or mobile station)], one time slot includes a slot format in which a plurality of known reference signals are placed (see Fig. 2), the other station obtains the phase fluctuation among the plurality of reference signals from the plurality of reference signals within the same time slot and corrects the frequency deviation of the channel using the phase fluctuation. Alternatively, it may be so arranged that a plurality of reference signals are placed in a plurality of time slots that form a hopping period, the phase fluctuation among the plurality of reference signals is obtained and the frequency deviation of the channel is corrected using the phase fluctuation.

<First Exemplary Embodiment>

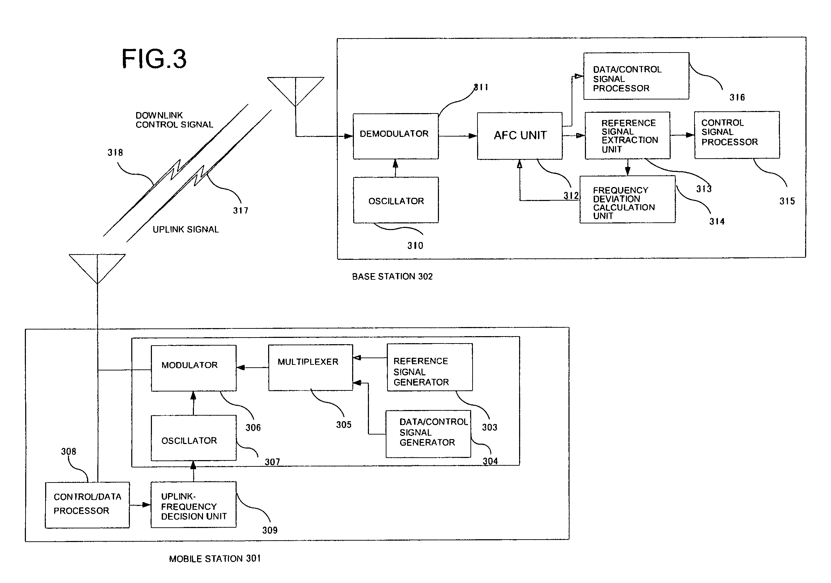

An exemplary embodiment of the present invention will be described with reference to the drawings, in which Fig. 3 is a diagram illustrating the main components of the exemplary embodiment. As illustrated in Fig. 3, this exemplary embodiment includes a mobile station 301 and a base station 302 that communicate wirelessly. It should be noted that a demodulator, etc., is not shown within the mobile station 301 and that a modulator, etc., is not shown within the base station 302 in Fig. 3. Further, only one mobile station 301 is illustrated in Fig. 3 for the sake of simplicity.

The mobile station 301 includes a reference signal generator 303, a data/control signal generator 304, a multiplexer 305, a modulator 306, an oscillator 307, and control/data processor 308 and an uplink-frequency decision unit 309.

The base station 302 includes a demodulator 311, an oscillator 310, an AFC (Automatic Frequency Control) unit 312, a reference signal extraction unit 313, a frequency deviation calculation unit 314, a control signal processor 315 and a data/control signal processor 316.

The reference signal generator 303 of the mobile station 301 generates an already known reference signal (pilot signal), and the data/control signal generator 304 generates control information and transmit data to be sent to the base station.

The multiplexer 305 temporally multiplexes and outputs the reference signal from the reference signal generator 303 and the data/control signal from the data/control signal generator 304.

When the reference signal and data/control signal are multiplexed, the multiplexer 305 furnishes one time slot with a control channel comprising a plurality of the reference signals and the control signal, and with a data channel comprising one reference signal and the data/control signal, as shown in Fig. 2.

In the control channel comprising the plurality of reference signals (two reference signals in Fig. 2) and the control signal, as shown in Fig. 2, time Tref (in seconds) between the reference signals is made a set value known to both the mobile station 301 and base station 302. Frequency hopping is carried on the time-slot basis and the carrier frequencies of the control channel and data channel differ from each other.

The signal multiplexed by the multiplexer 305 is frequency-modulated by the modulator 306 based upon the frequency generated by the oscillator 307, and the frequency-modulated signal is transmitted from an antenna as an uplink signal 317.

The modulation frequency is decided by frequency information extracted from a downlink control signal 318 from the base station 302. That is, the downlink control signal 318 from the base station 302 is demodulated by a demodulator (not shown) and processed by the control/data processor 308. The uplink-frequency decision unit 309 decides the modulation frequency of the uplink signal 317 of mobile station 301 from the downlink control signal 318 (frequency setting information) extracted by the control/data processor 308 and sets the oscillation frequency of the oscillator 307 to the frequency decided. The modulator 306 frequency-modulates the time slot (carries out frequency hopping) by the newly decided frequency and transmits the frequency-modulated signal from the antenna as the uplink signal 317. The downlink control signal 318 from the base station 302 may also include information concerning frequency and slot assignment (correspondence) in frequency hopping.

The base station 302 receives the uplink signal 317 transmitted from the mobile station 301 and the demodulator 311 demodulates the signal to a baseband signal (e.g., a complex baseband signal comprising an in-phase component I and a quadrature-phase component Q) by the frequency generated by the oscillator 310. At this time the difference between the frequency of the uplink-frequency decision unit 309 in mobile station 301 and the frequency of the oscillator 310 in base station 302 appears in the baseband signal as a frequency deviation.

For example, in Fig. 2, if we let Tref [sec] represent the time interval between the two reference signals within one time slot of the control channel and let $\Delta f$ [Hz] represent the frequency deviation between the two reference signals, then the following relationship will hold between a phase fluctuation amount $\Delta\phi$ ref [rad] of receive baseband signals which correspond to the respective two reference signals, Tref and $\Delta f$:

$$\Delta\phi\mathrm{ref}\ [\mathrm{rad}]\ =\ 2\pi\cdot\Delta\mathrm{f}\cdot\mathrm{Tref} \qquad \ldots (1)$$

In one time slot of the control channel, the frequency deviation $\Delta f$ [Hz] of the two reference signals having the time interval Tref [sec] is caused by various factors such as frequency drift and Doppler shift.

The reference signal extraction unit 313 extracts phases from the receive baseband signals corresponding to the known reference signals within the time slot of the control channel. The phases of the receive baseband signals can be found by any well-known method. For example, the following method can be used, although it imposes no particular limitation on the present invention: In the case where two reference signals have been inserted into the time slot of the control channel, as illustrated in Fig. 2, phase $\phi$ref1 is found by $\phi$ref1 [rad] = arctan (I1/Q1) (where arctan is the inverse tangent function) from the receive baseband signal (I1, Q1) corresponding to the first reference signal, and phase $\phi$ref2 is found by $\phi$ref2 [rad] = arctan (I2/Q2) from the receive baseband signal (I2, Q2) corresponding to the second reference signal (an already known signal identical with the first reference signal). If there is no frequency deviation between the baseband signals, then the two phases $\phi$ref1 and $\phi$ref2 will be equal. The phase fluctuation amount $\Delta\phi$ref [rad] is found from the difference between $\phi$ref1 and $\phi$ref2.

$$\Delta\phi\mathrm{ref}\ [\mathrm{rad}]\ =\ \phi\mathrm{ref2}\ -\ \phi\mathrm{ref1} \qquad \ldots (2)$$

It should be noted that in a case where three or more reference signals exist in one time slot of the control channel, the reference signal extraction unit 313 finds phases $\phi[i]$, $\phi[i+1]$ (i = 1, 2, ...) relating to two reference signals, namely temporally sequential ith and (i+1)th reference signals, finds the phase fluctuation amount $\Delta\phi$ref1[i] by $\Delta\phi$ref[i] = $\phi[i+1]$ - $\phi[i]$ in accordance with Equation (2), and subjects these to weighted addition in accordance with Equation (3) below.

$$\Delta\phi\mathrm{ref}\ [\mathrm{rad}]\ =\ \Sigma\mathrm{w}[\mathrm{i}]\cdot\Delta\phi\mathrm{ref}[\mathrm{i}] \qquad \ldots (3)$$

where w[i] represents a weighting coefficient and $\Sigma$ represents summation relating to i.

Alternatively, instead of finding all phase fluctuation amounts relating to two temporally sequential reference signals within one time slot of the control channel, the most recent reference signal and several earlier reference signal may be selected to find the phase fluctuation amount $\Delta\phi$ ref [rad]. Naturally, in a case where three or more reference signals exist in one time slot of the control channel, the intervals between two temporally sequential reference signals need not be the same (it will suffice if the intervals are already known by the mobile station and base station).

From the Δϕref extracted by the reference signal extraction unit 313, the frequency deviation calculation unit 314 finds the frequency deviation Δf by the following equation based upon the relation of Equation (1):

$$\Delta f = \Delta \phi \mathrm{ref}/(2 \pi \cdot \mathrm{Tref}) \qquad \ldots (4)$$

The AFC unit 312 corrects the frequency of the receive baseband signal based upon the frequency deviation Δf found by the frequency deviation calculation unit 314. For example, if the frequency of the receive baseband signal is frx [Hz] and the frequency thereof after correction is fADC [Hz], then the correction of frequency is performed according to the following equation:

$$\mathrm{fAFC} = \mathrm{frx} - \Delta f \qquad \ldots (5)$$

The AFC unit 312 sends the corrected control signal to the control signal processor 315, where the signal is applied to call processing, etc.

With regard to the data channel, the AFC unit 312 corrects frequency using the frequency deviation (e.g., the frequency deviation Δf found by the frequency deviation calculation unit 314 with respect to the control channel). The signal after correction by the AFC unit 312 is sent to the data/control signal processor 316, where the signal is applied to data processing and call processing, etc.

In this exemplary embodiment, the frequency correction is applied to all uplink channels received from the same mobile station inclusive of channels (the data channels) having only the single reference signal in one time slot, the correction being based upon the frequency deviation Δϕ ref found using the channel (the control channel) having a plurality of reference signals in one time slot.

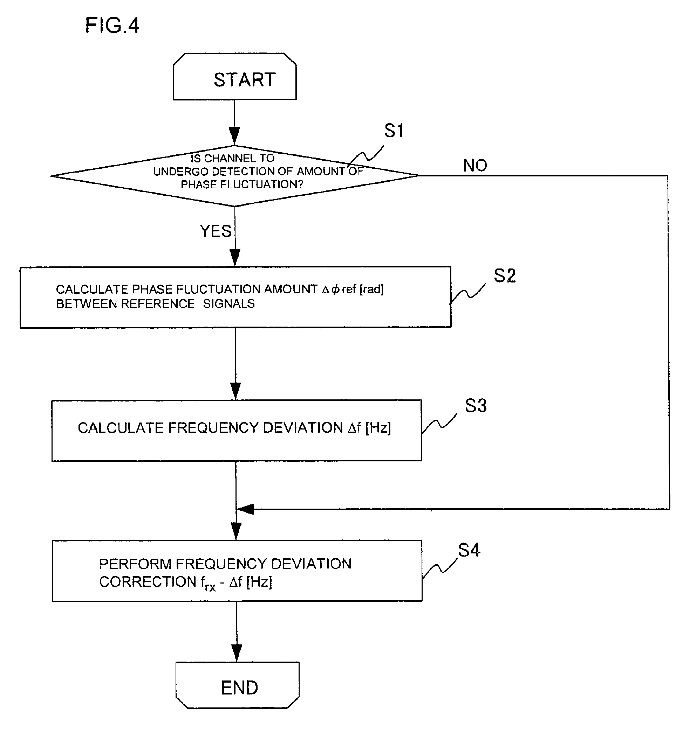

Fig. 4 is a flowchart for describing the operation of this exemplary embodiment. The operation of this exemplary embodiment will be described with reference to Figs. 3 and 4.

The base station 302 determines whether the receive channel is a channel to undergo detection of a phase difference (namely the control channel of Fig. 2) (step S1). In the example of the configuration shown in Fig. 3, the AFC unit 312 is equipped with a function for discriminating whether the channel is a control channel or data channel based upon the frequency. However, the invention is not particularly limited to this example.

If the channel is one (namely the control channel of Fig. 2) that is to undergo detection of amount of phase fluctuation ("YES" at step S1), then the reference signal extraction unit 313 extracts phase from the baseband signals corresponding to the already known reference signals in the time slot of the control channel and derives the phase fluctuation amount Δϕ ref between the reference signals (step S2). For example, the following method can be used, although it imposes no particular limitation: In the case where the control channel includes two reference signals at an interval of Tref in one time slot, step S2 involves finding phase ϕref1 from the baseband signal corresponding to the first reference signal, finding phase ϕref2 from the baseband signal corresponding to the second reference signal, and deriving the phase fluctuation amount Δϕref from the difference ϕref2 - ϕref1.

The frequency deviation calculation unit 314 finds the frequency deviation Δf [Hz] from the phase fluctuation amount Δϕref according to Δϕref/(2 π ·Tref) in Equation (4) cited above (step S3).

On the assumption that frx [Hz] represents the frequency of the receive baseband signal and that fAFC represents the corrected frequency, the AFC unit 312 performs the frequency correction according to fAFC = frx - Δf in Equation (5) cited above (step S4).

In a case where the channel is not a channel to undergo detection of phase fluctuation amount ("NO" at step S1), the calculation of the frequency deviation for this channel is not carried out and the AFC unit 312 performs the correction based upon Equation (5) above using the frequency deviation Δf [Hz] found for the channel to undergo the detection of phase fluctuation amount.

In accordance with this exemplary embodiment, in a wireless communication system that employs frequency hopping, it is possible to correct the frequency deviation between a mobile station and a base station in simple fashion with respect to a channel having such a slot format that the amount of phase fluctuation cannot be calculated within the same time slot. This enables an improvement in reception characteristics.

It should be noted that it may be so arranged that at least the processing of the reference signal extraction unit 313 and frequency deviation calculation unit 314 within the base station 302 of Fig. 3 is implemented by a computer (processor, digital signal processor), etc., within the base station 302.

In this exemplary embodiment, the arrangement is such that a frequency deviation is corrected using the frequency deviation Δf found within a single slot of the control channel. As a matter of course, however, the present invention is not limited to such an arrangement.

<Second Exemplary Embodiment>

In another exemplary embodiment of the present invention, it may be so arranged that frequency deviation of a control channel is measured individually using a plurality of time slots, and the frequency deviation of a receive baseband signal is corrected based upon a value obtained by statistically processing the individual frequency deviations, e.g., a value obtained by averaging or smoothing the individual frequency deviations.

In a case where sufficient accuracy cannot be assured using a measured value for a single slot, as in a case where the bit length of the reference signal is too short or a case where an adequate interval cannot be assured between reference signals, the accuracy of frequency correction can be improved by deciding the frequency deviation using a value obtained by averaging or smoothing the measured values obtained for a plurality of slots.

<Third Exemplary Embodiment>

With regard to a data channel, in a case where there is a period of time in which a plurality of time slots fall within the same frequency, or in a case of operation in which the hopping period is set to two or more slots temporarily, an arrangement may be adopted in which, by way of example, the frequency deviation is corrected using phase-difference information (phase fluctuation amount) found for the data channel only in this period of time. That is, in the example of the slot format depicted in Fig. 2, it may be so arranged that there is one reference signal per slot, $\Delta\phi$ref is found, in accordance with the method described in the first exemplary embodiment, from a plurality of reference signals in relation to data channels of two or more slots, and then the frequency deviation $\Delta f$ is found.

<Fourth Exemplary Embodiment>

Further, in the foregoing exemplary embodiments, an example in which a frequency deviation is corrected on the side of the base station is described. However, it is also possible to apply the invention with regard to a downlink signal receiving operation on the side of the mobile station. That is, an arrangement may be adopted in which elements equivalent to the demodulator 311, oscillator 310, AFC unit 312, reference signal extraction unit 313 and frequency deviation calculation unit 314 of the base station 302 in Fig. 3 are provided on the side of the mobile station, and elements such as the reference signal generator 303, data/control signal generator 304, multiplexer 305 and modulator 306 of the mobile station 301 in Fig. 3 are provided on the side of the base station.

By way of example, a mobile station usually is over the horizon with respect to the base station, receives radio waves from various paths and develops a deviation in frequency owing to the Doppler shift, etc. In accordance with this exemplary embodiment, the mobile station finds the phase fluctuation amount $\Delta\phi$ ref between reference signals in accordance with the principle of frequency-deviation correction described in relation to the base station in the foregoing exemplary embodiments, derives the frequency deviation $\Delta f$ and corrects the frequency. That is, in this exemplary embodiment, a plurality of reference signals are inserted into the control channel of the downlink signal from the base station (see Fig. 2) and, on the side of the mobile station, the phase fluctuation amount between the reference signals is found, the frequency deviation is derived and the frequency fluctuation is corrected in accordance with the principle described in the foregoing exemplary embodiments.

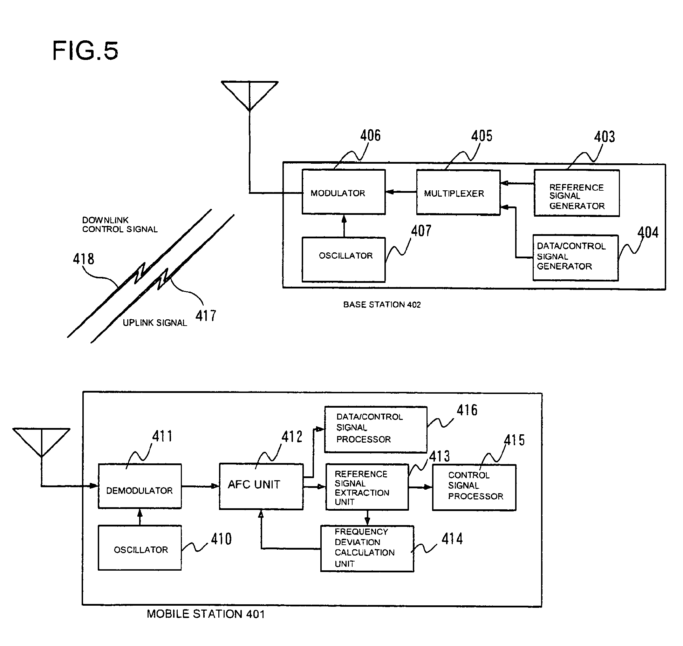

Fig. 5 is a diagram illustrating the configuration of this exemplary embodiment. It should be noted that a modulator, etc., is not shown within a mobile station 401 and that a demodulator, etc., is not shown within a base station 402 in Fig. 5. In the base station 402, the multiplexer 405 temporally multiplexes and outputs a reference signal from a reference signal generator 403 and a data/control signal from a data/control signal generator 404. When the reference signal and data/control signal are multiplexed, the multiplexer 405 furnishes one time slot with a control channel comprising a plurality of the reference signals and the control signal, and with a data channel comprising one reference signal and the data/control signal, as shown in Fig. 2. A modulator 406 frequency-modulates the time slot by the frequency of an oscillator 407 and transmits the frequency-modulated signal from an antenna as a downlink signal 418.

The mobile station 401 receives the downlink signal 418 from the base station 402 and the signal is demodulated to receive baseband signals by a demodulator 411. In the case of the control channel of Fig. 2, a reference signal extraction unit 413 extracts phases from the receive baseband signals corresponding to the plurality of known reference signals within the time slot of the control channel and derives the phase fluctuation amount $\Delta\phi$ref [rad] between the reference signals. A frequency deviation calculation unit 414 finds the frequency deviation $\Delta f$ [Hz] from the phase fluctuation amount $\Delta\phi$ref according to $\Delta\phi$ ref/$(2\pi \cdot Tref)$ of Equation (4) above. If the frequency of the receive baseband signal is frx [Hz] and the frequency thereof after correction is fADC [Hz], then an AFC unit 412 corrects the frequency according to fAFC = frx - $\Delta f$ of Equation (5) above. In a case where the channel is not a channel (the control channel) to undergo detection of phase fluctuation amount, the calculation of the frequency deviation for this channel is not carried out and the AFC unit 412 performs the correction based upon Equation (5) above using the frequency deviation Δf [Hz] found for the channel (control channel) to undergo the detection of phase fluctuation amount.

It should be noted that it may be so arranged that at least the processing of the reference signal extraction unit 413 and frequency deviation calculation unit 414 within the mobile station 401 of Fig. 5 is implemented by a computer (processor, digital signal processor), etc., within the base station 402.

<Fifth Exemplary Embodiment>

In another exemplary embodiment of the present invention, an arrangement may be adopted in which both the sides of both the mobile station and base station are equipped with a function for correcting frequency deviation in accordance with the present invention. More specifically, the mobile station having the configuration shown in Fig. 3 may be additionally provided with the configuration of Fig. 5, and the base station having the configuration shown in Fig. 3 may be additionally provided with the configuration of Fig. 5.

Although the present invention is applicable to a wireless communication system that employs frequency hopping, the invention is particularly ideal for application to a mobile communication system composed of base stations and mobile stations and using frequency hopping.

Though the present invention has been described in accordance with the foregoing exemplary embodiments, the invention is not limited to these embodiments and it goes without saying that the invention covers various modifications and changes that would be obvious to those skilled in the art within the scope of the claims.

**Claims**

1. A wireless communication system comprising:

   a first node which transmits a plurality of reference signals upon placing the reference signals in temporally spaced-apart relation in at least one of information transmission units wirelessly transmitted in conformity with a hopping period; and
   a second node which, if an information transmission unit received from the first node is an information transmission unit that includes a plurality of the reference signals, obtains a phase fluctuation from the plurality of reference signals and derives a frequency deviation from the phase fluctuation.

2. The system according to claim 1, wherein the second node corrects the frequency of a received signal based upon the frequency deviation.

3. The system according to claim 1 or 2, wherein the second node obtains a plurality of frequency deviations from, and corresponding to, results of measuring phase fluctuation of reference signals relating to a plurality of the information transmission units and statistically processes the plurality of frequency deviations to thereby correct the frequency deviation of a received signal.

4. The system according to claim 1 or 2, wherein in regard to at least one information transmission unit received after an information transmission unit that includes a plurality of the reference signals, the second node performs the correction of frequency using the frequency deviation obtained in relation to the information transmission unit that includes the plurality of the reference signals.

5. The system according to any one of claims 1 to 4, wherein the information transmission unit includes at least one time slot transmitted at the same carrier frequency.

6. The system according to any one of claims I to 5, wherein the information transmission unit that includes the plurality of reference signals forms a time slot of a control channel;
   an information transmission unit that includes at least data forms a time slot of a data channel; and
   the control channel and one or a plurality of the data channels are transmitted from the first node to the second node by a frequency hopping scheme.

7. The system according to any one of claims 1 to 6, wherein the first node includes:

   a reference signal generating means that generates the reference signals;
   a data/control signal generating means that generates a data/control signal that is to be transmitted to the second node;
a multiplexing means that temporally multiplexes the reference signals and the data/control signal to thereby generate the information transmission unit; and
a frequency-modulating means that performs frequency-modulation of the information transmission unit and transmits the modulated signal;

wherein a plurality of the reference signals are inserted into at least one information transmission unit among the information transmission units in association with a plurality of the information transmission units transmitted by a frequency hopping scheme.

8. The system according to any one of claims 1 to 7, wherein the second node includes:

a reference signal extraction means that, if a received information transmission unit is an information transmission unit that includes a plurality of the reference signals, calculates an amount of phase fluctuation from phases of the plurality of reference signals;
a frequency deviation calculation means that derives a frequency deviation from the amount of phase fluctuation; and
a frequency correction means that corrects the frequency of a received signal based upon the frequency deviation.

9. The system according to any one of claims 1 to 8, wherein the first and second nodes construct a mobile station and a base station, respectively.

10. The system according to any one of claims 1 to 8, wherein the first and second nodes construct a base station and a mobile station, respectively.

11. A base station comprising:

a means that receives an information transmission unit transmitted in conformity with a hopping period as an uplink signal from a mobile station; and
a means that, if the received information transmission unit is an information transmission unit in which a plurality of reference signals have been placed in temporally spaced-apart relation, obtains a phase fluctuation of the plurality of reference signals and derives a frequency deviation from the phase fluctuation.

12. The base station according to claim 11, further comprising a means that corrects frequency of a received signal based upon the frequency deviation.

13. A mobile station comprising:

a means that receives an information transmission unit transmitted in conformity with a hopping period as a downlink signal of a base station; and
a means that, if the received information transmission unit is an information transmission unit in which a plurality of reference signals have been placed in temporally spaced-apart relation, obtains a phase fluctuation of the plurality of reference signals and derives a frequency deviation from the phase fluctuations.

14. The mobile station according to claim 13, further comprising a means that corrects frequency of a received signal based upon the frequency deviation.

15. A base station wirelessly transmitting information using a frequency hopping scheme, **characterized in that** the base station transmits a plurality of reference signals upon placing the reference signals in temporally spaced-apart relation in at least one of information transmission units, wirelessly transmitted in conformity with a hopping period.

16. A mobile station wirelessly transmitting information using a frequency hopping scheme, **characterized in that** the mobile station transmits a plurality of reference signals upon placing the reference signals in temporally spaced-apart relation in at least one of information transmission units, wirelessly transmitted in conformity with a hopping period.

17. A wireless communication method comprising:

receiving an information transmission unit wirelessly transmitted from a transmitting side in conformity with a hopping period; and

if the received information transmission unit is an information transmission unit in which a plurality of reference signals have been placed in temporally spaced-apart relation, obtaining a phase fluctuation of the plurality of reference signals and deriving a frequency deviation from the phase fluctuation.

**18.** The method according to claim 17, further comprising:

correcting the frequency of a received signal based upon the frequency deviation.

**19.** The method according to claim 17, wherein a plurality of frequency deviations of obtained from results of measuring phase fluctuation of reference signals relating to a plurality of the information transmission units, and the plurality of frequency deviations are statistically processed to thereby correct the frequency deviation of a received signal.

**20.** The method according to claim 17 or 18, wherein in regard to at least one information transmission unit received after an information transmission unit that includes a plurality of the reference signals, frequency is corrected using the frequency deviation obtained in relation to the information transmission unit that includes the plurality of the reference signals.

**21.** The method according to any one of claims 17 to 20, wherein in the information transmission unit includes at least one time slot transmitted at the same carrier frequency.

**22.** A computer program for causing a computer constituting a base station to execute the processing of:

receiving an information transmission unit transmitted in conformity with a hopping period as an uplink signal from a mobile station; and

if the received information transmission unit is an information transmission unit in which a plurality of reference signals have been placed in temporally spaced-apart relation, obtaining a phase fluctuation of the plurality of reference signals and deriving a frequency deviation from the phase fluctuation.

**23.** A computer program for causing a computer constituting a mobile station to execute the processing of:

receiving an information transmission unit transmitted in conformity with a hopping period as a downlink signal from a base station; and

if the received information transmission unit is an information transmission unit in which a plurality of reference signals have been placed in temporally spaced-apart relation, obtaining a phase fluctuation of the plurality of reference signals and deriving a frequency deviation from the phase fluctuation.

# FIG.1

Frequency

Reference Signal

Data/Control Signal

Slot

Frequency Hopping

Slot

Frequency Hopping

Time

# FIG.2

EP 2 034 621 A1

Frequency

Control Channel

$T_{ref}$ [sec]

$T_{slot}$[sec]

Frequency Hopping

Data Channel

Slot

Data Channel

Frequency Hopping

Time

Reference Signal

Control Signal

Data/Control Signal

# FIG.3

DOWNLINK
CONTROL SIGNAL

318

UPLINK SIGNAL

317

## BASE STATION 302

| DATA/CONTROL SIGNAL PROCESSOR | 316 |

311

| DEMODULATOR | → | AFC UNIT | → | REFERENCE SIGNAL EXTRACTION UNIT | → | CONTROL SIGNAL PROCESSOR |

| OSCILLATOR |

312

| FREQUENCY DEVIATION CALCULATION UNIT | 313 |

314

315

310

## MOBILE STATION 301

| MODULATOR | ← | MULTIPLEXER | ← | REFERENCE SIGNAL GENERATOR |

| OSCILLATOR |

306

305

| DATA/CONTROL SIGNAL GENERATOR | 303 |

307

304

308

| CONTROL/DATA PROCESSOR | | UPLINK-FREQUENCY DECISION UNIT |

309

EP 2 034 621 A1

13

FIG.4

```
                    ┌──────────────┐
                    │    START     │
                    └──────┬───────┘
                           │
                           ▼                              S1
              ╱─────────────────────────╲
             ╱      IS CHANNEL TO         ╲      NO
            ⟨ UNDERGO DETECTION OF AMOUNT OF ⟩──────────────┐
             ╲     PHASE FLUCTUATION?      ╱                 │
              ╲─────────────────────────╱                   │
                           │                                │
                         YES│                               │
                           ▼                                │
     ┌─────────────────────────────────────────┐   S2       │
     │ CALCULATE PHASE FLUCTUATION AMOUNT Δφref [rad] │       │
     │ BETWEEN REFERENCE  SIGNALS               │           │
     └─────────────────────┬───────────────────┘           │
                           │                                │
                           ▼                                │
     ┌─────────────────────────────────────────┐   S3       │
     │   CALCULATE FREQUENCY DEVIATION Δf [Hz]  │           │
     └─────────────────────┬───────────────────┘           │
                           │◄───────────────────────────────┘
                           ▼
     ┌─────────────────────────────────────────┐   S4
     │   PERFORM FREQUENCY DEVIATION            │
     │   CORRECTION frx - Δf [Hz]               │
     └─────────────────────┬───────────────────┘
                           │
                           ▼
                    ┌──────────────┐
                    │     END      │
                    └──────────────┘
```

S1 — IS CHANNEL TO UNDERGO DETECTION OF AMOUNT OF PHASE FLUCTUATION?

S2 — CALCULATE PHASE FLUCTUATION AMOUNT $\Delta\phi$ref [rad] BETWEEN REFERENCE SIGNALS

S3 — CALCULATE FREQUENCY DEVIATION $\Delta f$ [Hz]

S4 — PERFORM FREQUENCY DEVIATION CORRECTION $f_{rx} - \Delta f$ [Hz]

# FIG.5

DOWNLINK
CONTROL SIGNAL

418

UPLINK SIGNAL 417

406 405 403

MODULATOR ◄── MULTIPLEXER ◄── REFERENCE
SIGNAL
GENERATOR

OSCILLATOR 407

DATA/CONTROL
SIGNAL
GENERATOR 404

BASE STATION 402

DATA/CONTROL
SIGNAL
PROCESSOR 416

411 412

415

DEMODULATOR ──► AFC UNIT

REFERENCE
SIGNAL
EXTRACTION
UNIT 413

CONTROL
SIGNAL
PROCESSOR

OSCILLATOR 410

FREQUENCY
DEVIATION
CALCULATION
UNIT 414

MOBILE STATION 401

Europäisches
Patentamt

European
Patent Office

Office européen
des brevets

**EUROPEAN SEARCH REPORT**

Application Number

EP 08 01 5865

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 243 113 A (ERICSSON TELEFON AB L M [SE]) 25 September 2002 (2002-09-25) * column 1 - column 6 * ----- | 1-23 | INV.<br>H04B1/713<br>H04L27/00 |
| A | JONATHAN S MIN ET AL: "Analysis and Design of a Frequency-Hopped Spread-Spectrum Transceiver for Wireless Personal Communications" IEEE TRANSACTIONS ON VEHICULAR TECHNOLOGY, IEEE SERVICE CENTER, PISCATAWAY, NJ, US, vol. 49, no. 5, 1 September 2000 (2000-09-01), XP011064130 ISSN: 0018-9545 * the whole document * ----- | 1-23 | |

TECHNICAL FIELDS
SEARCHED (IPC)

H04B
H04L

The present search report has been drawn up for all claims

| Place of search | Date of completion of the search | Examiner |
|---|---|---|
| Berlin | 27 November 2008 | González Gutiérrez |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
& : member of the same patent family, corresponding
document

EPO FORM 1503 03.82 (P04C01)

EP 2 034 621 A1

## ANNEX TO THE EUROPEAN SEARCH REPORT
## ON EUROPEAN PATENT APPLICATION NO.

EP 08 01 5865

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2008

| Patent document cited in search report | | Publication date | Patent family member(s) | | Publication date |
|---|---|---|---|---|---|
| EP 1243113 | A | 25-09-2002 | AT | 304772 T | 15-09-2005 |
| | | | AU | 2842301 A | 09-07-2001 |
| | | | CN | 1415155 A | 30-04-2003 |
| | | | DE | 60022680 D1 | 20-10-2005 |
| | | | WO | 0149000 A1 | 05-07-2001 |
| | | | US | 6606363 B1 | 12-08-2003 |

EPO FORM P0459

For more details about this annex : see Official Journal of the European Patent Office, No. 12/82

**EP 2 034 621 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007233619 A
- JP 2006512808 A